# EUROPÄISCHE PATENTSCHRIFT

(11) **EP 1 942 023 B1**
(45) Veröffentlichungstag und Bekanntmachung des Hinweises auf die Patenterteilung: **23.09.2009**
(21) Anmeldenummer: 08007422.2
(22) Anmeldetag: 07.02.2007
(51) Int. Cl.: B60J 1/20

(54) **Rollo mit Zentrierung durch Anschläge**
Roller blind with centring via stops
Store doté d'un centrage par butées

(30) Priorität: 22.02.2006 DE 102006008160
(43) Veröffentlichungstag der Anmeldung: 09.07.2008
(62) Teilanmeldung aus: 07002591.1
(73) Patentinhaber: BOS GmbH & Co. KG, 73760 Ostfildern (DE)
(72) Erfinder: Walter, Herbert, 73061 Ebersbach (DE); Schlecht, Werner, P., 71665 Vaihingen/Enz (DE)
(74) Vertreter: Rüger, Barthelt & Abel Patentanwälte

(56) Entgegenhaltungen:
- EP-A1- 1 211 109
- DE-A1- 10 057 760
- DE-B3-102004 020 531

## Beschreibung

Aus designtechnischen Gründen ist die Heckscheibe eines Pkw nicht von zueinander parallelen Kanten begrenzt. Die Breite der Heckscheibe, beziehungsweise des Heckfensters, vermindert sich ausgehend von der Gürtellinie bis nach oben zur Dachhinterkante.

Wenn ein solches Heckfenster mit Hilfe eines Rollos abgeschattet werden soll, werden neuerdings Führungsschienen verwendet, die in der C-Säule integriert sind. Entsprechend dem Verlauf der C-Säule ändern auch diese Führungsschienen ihren Abstand voneinander. Die Folge davon ist, dass ein Heckscheibenrollo, dessen Auszugsprofil in den Führungsschienen läuft, teleskopartig längenverstellbar sein muss.

Das Auszugsprofil eines solchen Rollos, wie es beispielsweise aus der DE 2 004 020 531 B3 oder der DE 157 760 A1 bekannt ist, setzt sich aus einem Mittelstück und zwei Endstücken zusammen. Die Endstücke sind gegenüber dem Mittelstück teleskopartig verschiebbar. Die Endstücke sind mit Gleitern versehen, die in den Führungsschienen laufen.

An dem Mittelstück des Auszugsprofils ist mit einer Kante die Rollobahn befestigt, deren andere Kante an einer Wickelwelle verankert ist. Die Wickelwelle ist starr und unveränderlich im Bereich der Hutablage oder darunter innerhalb der Karosserie drehbar gelagert.

Im eingefahrenen Zustand sind die Endstücke maximal aus dem Mittelstück herausgezogen. Beim Ausfahren des Rollos, wenn sich das Auszugsprofil der Dachhinterkante nähert, gleiten die Endstücke in das Mittelstück hinein. Der Betrag der Relativbewegung zwischen Endstück und Mittelstück wird dort am größten sein, wo die Reibungskraft zwischen den beiden Teilen kleiner ist, verglichen mit dem anderen Endstück. Im voll ausgezogenen Zustand besteht somit die Gefahr, dass das Mittelstück gegenüber der konstruktiven Mitte des Rollos verschoben ist, was zu hässlichen Schrägfalten in der Rollobahn führt. Um dem entgegen zu wirken, ist es aus den oben genannten Druckschriften bekannt, die beiden Endstücke über ein Differenzialgetriebe zu koppeln, damit zwangsläufig das Mittelstück zwischen den Endstücken immer zentriert bleibt.

Die Anordnung ist sehr wirkungsvoll aber verhältnismäßig aufwändig.

Die EP 1 211 109 A1 , die den Oberbegriff des Anspruchs 1 entspricht, erläutert in der Beschreibungseinleitung einen Aufbau eines Heckscheibenrollos mit einer Zentrierung des Mittelstücks. Das bekannte Heckscheibenrollo weist eine Wickelwelle auf, die unterhalb der Hutablage drehbar gelagert ist. Neben den Seitenkanten des Fensters verlaufen Führungsschienen, in denen ein Zugstab oder Auszugsprofil längsverschieblich geführt ist. Die Führungsschienen konvergieren in Richtung auf das obere Ende der Heckfensterscheibe, womit die Länge des Zugstabs verstellbar sein muss. Dementsprechend setzt sich der Zugstab aus einem Mittelstück zusammen, das mit der Rollobahn verbunden ist, und zwei Endstücken, die endseitig in den Führungsschienen geführt sind und die unterschiedlich tief in das Mittelstück eintauchen können.

Um das Mittelstück in der ausgefahrenen Stellung der Rollobahn zu zentrieren ist vorgesehen, dass die Länge des Mittelstücks dem Abstand der Führungsschienen an jener Stelle entspricht, in die das Mittelstück gelangt, wenn die Rollobahn vollständig ausgefahren ist.

Ausgehend hiervon ist es Aufgabe der Erfindung, eine Anordnung zu schaffen, die auf einfachere Weise die Zentrierung des Mittelstücks bei voll ausgezogenem Rollo gewährleistet.

Diese Aufgabe wird erfindungsgemäß durch ein Rollo mit den Merkmalen des Anspruchs 1 gelöst.

Bei dem Rollo ist eine Wickelwelle vorgesehen, die ortsfest drehbar im Fahrzeug gelagert ist. An dieser Wickelwelle ist mit einer Kante eine Rollobahn befestigt, deren gegenüberliegende Kante mit einem Auszugsprofil verbunden ist. Das Auszugsprofil setzt sich aus einem Mittelstück und zwei gegenüber dem Mittelstück verschieblichen Endstücken zusammen. Die Endstücke tragen an ihren freien aus dem Mittelstück herausragenden Ende jeweils einen Gleiter. Der Gleiter läuft in der Führungsnut einer zugehörigen Führungsschiene. Die beiden Führungsschienen konvergieren in Richtung von der Wickelwelle weg.

An dem Mittelstück sind Anschläge vorgesehen, die dazu eingerichtet sind, mit den Führungsschienen zusammen zu wirken. Im ausgefahrenen Zustand stoßen sie an die Führungsschienen an und drängen entsprechend das Mittelstück in die erforderliche zentrierte Position.

Selbst wenn sich während des Ausfahrens der Rollobahn das Mittelstück ungleichmäßig auf den beiden Endstücken verschieben sollte und die Rollobahn dabei schief gezogen wird, wird am Schluss eine Anordnung und Stellung des Mittelstücks erreicht, in der dieser Schiefzug durch entsprechende seitliche Verschiebung des Mittelstücks mit Hilfe der Zentriereinrichtung beseitigt wird.

Dabei wird durchaus in Kauf genommen, dass während der Ausfahrbewegung der Rollobahn unter Umständen Schrägfalten entstehen. Dieser Zustand ist jedoch transient und wird vergleichsweise schnell durchlaufen, womit die Schrägfalten nicht weiter störend in Erscheinung treten.

Im Übrigen sind Weiterbildungen der Erfindung Gegenstand von Unteransprüchen.

Wie sich unschwer aus der Figurenbeschreibung erkennen lässt, handelt es sich hierbei um vereinfachte Ausführungsbeispiele, die lediglich den Zweck haben, das Grundprinzip der Erfindung zu erläutern. Es ist ferner unschwer zu erkennen, dass eine Reihe von Abwandlungen möglich sind, um das Grundprinzip der Erfindung an die jeweiligen Einbauverhältnisse anzupassen.

In der Zeichnung zeigen:
- Fig. 1: einen Blick in den Fondbereich eines aufgebrochenen gezeigten Pkws, in einer perspektivischen Darstellung,
- Fig. 2: ein Ausführungsbeispiel des Heckfensterrollos des Kraftfahrzeugs nach Fig. 1, mit einer an dem Mittelstück sitzenden Zentriereinrichtung, in einer stark schematisierten Darstellung, und
- Fig. 3: das Heckscheibenrollo des Kraftfahrzeugs nach Fig. 1, bei dem das Mittelstück zwischen den Führungsscheinen zentriert wird, in einer stark schematisierten Darstellung.

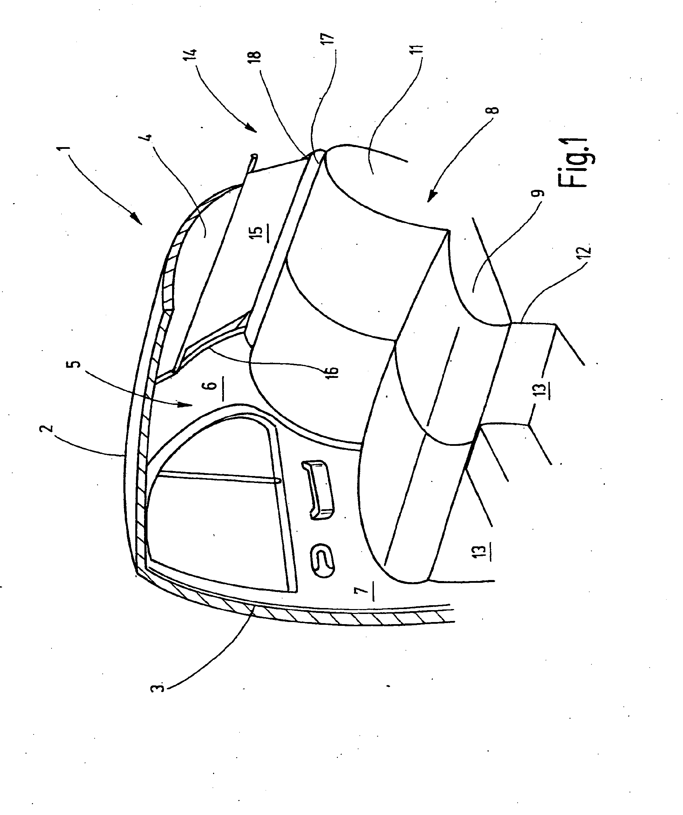

Fig. 1 stellt den aufgebrochenen abgeschnittenen Fondbereich eines Pkw dar. Die Figur veranschaulicht einen Blick auf die rechte Innenseite, die zu der weggebrochenen linken Innenseite spiegelbildlich ist. Die Darstellung ist vereinfacht, so sind beispielsweise Karosserieinnenstrukturen, wie Versteifungen und Befestigungsmittel, nicht gezeigt, da die Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule, die sich im Abstand zu der B-Säule 3 befindet. Die C-Säule 5 trägt eine Innenverkleidung 6. Die Breite des Heckfensters 4 ist in der Nähe seiner Oberkante geringer als auf der Höhe der Gürtellinie der Karosserie.

Zwischen der B-Säule 3 und der C-Säule 5 ist an der B-Säule eine hintere rechte Seitentür 7 in der bekannten Weise anscharniert.

Auf der Höhe der hinteren rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogener Rollobahn 15 sowie eine der seitlichen Führungsschienen 16 zu erkennen. Die Führungsschiene 16 beginnt an einer hinter der Rücksitzlehne 11 vorhandenen Hutablage 17 und verläuft neben der seitlichen Fensterkante. Eine weitere Führungsschiene befindet sich spiegelbildlich in dem weggebrochen Teil der Karosserie. Die Führungsschienen besteht aus Kunststoff und sind in der die C-Säule 5 verkleidenden Innenverkleidung integriert.

Außerdem enthält die Hutablage 17 einen durchgehenden Auszugsschlitz 18, aus dem die Rollobahn 15 beim Ausfahren herausläuft.

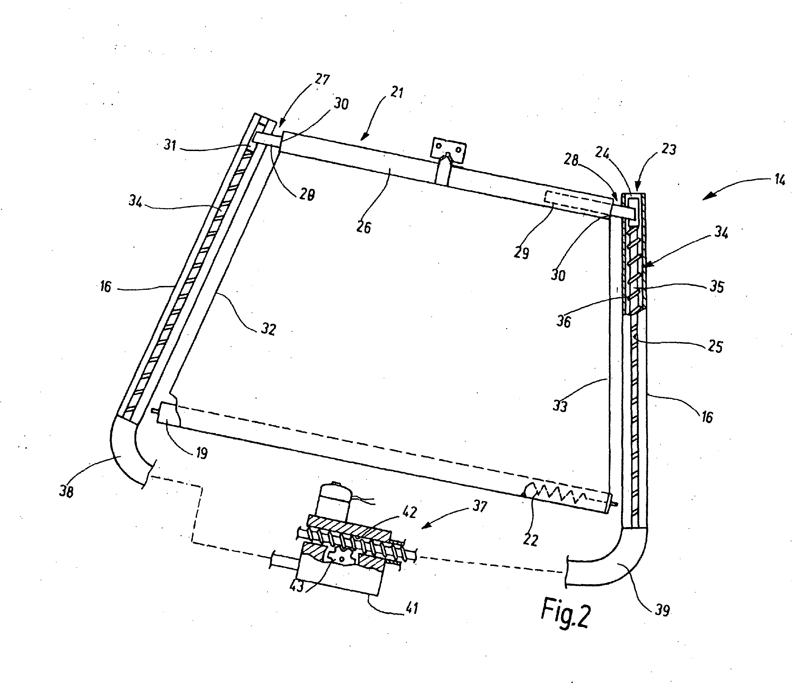

Der prinzipielle Aufbau des Heckscheibenrollos 14 ergibt sich aus Fig. 2.

Zu dem Heckfensterrollo 14 gehören neben der Rollobahn 15 eine unterhalb des Auszugsschlitzes 18 beziehungsweise unterhalb der Hutablage 17 drehbar gelagerte Wickelwelle 19 sowie ein Auszugsprofil 21. Die Rollobahn 15 ist in Annäherung der Fenstergeometrie trapezförmig zugeschnitten und somit am oberen Ende schmäler als dem unteren Ende neben der Wickelwelle 19.

An der Wickelwelle 19 ist mit einer Kante die Rollobahn 15 befestigt. Mit Hilfe einer als Federmotor dienenden Schraubenfeder 22 wird die Wickelwelle 19 im Sinne eines Aufwickelns der Rollobahn 15 auf die Wickelwelle 19 vorgespannt. Hierzu ist die Schraubenfeder 22, wie schematisch angedeutet, einends an der Innenseite der Wickelwelle 19 festgelegt, während das andere Ende karosserieseitig drehfest verankert ist.

Das Auszugsprofil 21 ist beidends in den beiden Führungsschienen 16 geführt. Diese sind hinter der Seitenverkleidung 6 der C-Säule 5 angeordnet, folgen in ihrem Verlauf etwa der Kontur des Heckfensters 4 und konvergieren entsprechend in Richtung auf ihr oberes Ende. In Fig. 2 sind sie der Einfachheit halber gerade gezeigt. Die Führungsschienen 16 beginnen unterhalb der Hutablage 17 und enden in der Nähe der Oberkante des Heckfensters 4.

Die beiden Führungsschienen 16 haben den selben Aufbau. Es genügt damit, die Gestalt anhand einer der beiden Führungsschienen 16 im Einzelnen zu erläutern.

Die Führungsschiene 16 enthält eine Führungsnut 23, deren Querschnitt sich aus einer Nutenkammer 24 und einem Nutenschlitz 25 zusammensetzt. Der Nutenschlitz 25 zeigt eine geringere Weite als die Nutenkammer 24, die im Querschnitt kreisförmig ist.

Der Nutenschlitz 25 öffnet sich in Richtung auf das Heckfenster 5 und somit bei der schematischen Darstellung in Richtung auf den Betrachter.

Das Auszugsprofil 21 setzt sich aus einem Mittelstück 26 mit unveränderlicher starrer Länge und zwei teleskopisch verschiebbaren Endstücken 27 und 28 zusammen. Die beiden Endstücke 27 und 28 sind wiederum zueinander spiegelbildlich, weshalb es genügt, lediglich eines der beiden im Einzelnen zu erläutern. Die Beschreibung gilt sinngemäß auch für das andere der beiden Endstücke 27, 28, wobei zur Bezeichnung der dort vorhandenen Strukturen die selben Bezugszeichen verwendet werden.

Zu dem Endstück 27 gehört eine als Flachkant ausgebildete Stange 29, die in einem nicht weiter dargestellen Aufnahmekanal innerhalb des Mittelstücks 26 längs verschieblich unverdrehbar geführt ist und aus einem benachbarten Stirnende 30 des Mittelstücks 26 hervorsteht. Um das Eintauche der Stange 29 in das Mittelstück zu versinnbildlichen ist die Stange 29 auf der rechten Seite innerhalb des Mittelstücks 26 gestrichelt gezeichnet.

Die Stange 29 ist an ihrem freien aus dem Mittelstück 26 herausstehenden Ende bezogen auf die Zeichenebene nach unten in Richtung auf den Schlitz 25 abgewinkelt und führt durch den Schlitz 25 in die Führungsnut 23 hinein. Innerhalb der Führungsnut 23 ist an der Stange 29 ein Gleitstück 31 befestigt. Das Gleitstück 31 weist eine Gestalt auf, die mit dem Querschnitt der Nutenkammer 24 zusammenpasst. Die Dicke der Stange 29 ist so bemessen, dass sie klemmfrei durch den Führungsschlitz 25 laufen kann.

Die Rollobahn 15 ist, wie bereits erwähnt, trapezförmig zugeschnitten und wird von zwei Seitenkanten 32 und 33 begrenzt, die bei ausgezogener Rollobahn etwa parallel zu den beiden Führungsschienen 16 laufen. Das untere Ende der Rollobahn 15 ist in bekannter Weise an der Wickelwelle 19, beispielsweise über eine Kedernut befestigt, während die, obere Kante an dem Mittelstück 26 verankert ist. Die Verbindung zwischen dem Mittelstück 26 und der Rollobahn 15 ist bekannt und, da sie nicht Gegenstand der Erfindung ist, braucht sie auch im Einzelnen nicht erläutert zu werden. Wichtig ist lediglich, festzuhalten, dass die Breite der Rollobahn 15 im Anschluss an das Mittelstück 26 dessen Länge entspricht. Die Länge des Mittelstücks 26, d.h. der Abstand zwischen den Stirnenden 30, ist wiederum, wie gezeigt, geringfügig kürzer als der Abstand zwischen den beiden Führungsschienen 16 an jener Stelle, in die das Auszugsprofil 21 kommt, wenn die Rollobahn 15 vollständig ausgefahren ist.

Um die Rollobahn 15 vor dem Heckfenster 4 aufspannen zu können, läuft in jeder der beiden Nutenkammern 24 jeweils ein ausknicksicher geführtes biegeelastisches lineares Schubglied 34. Das Schubglied 34 setzt sich aus einer im Querschnitt kreisförmigen Seele 35 und einer auf der Seele 35 an deren Außenseite verlaufenden Wendel 36 zusammen. Die Wendel 36 ist mit der Seele 35 starr verbunden und bildet auf der Außenseite der Seele 35 gleichsam eine rundum laufende Verzahnung. Insoweit kann das lineare Schubglied 34 als beigeelastische rundumverzahnte Zahnstange aufgefasst werden. Das Schubglied 34 stößt mit seinem freien Ende gegen das benachbarte Stirnende des Gleitstücks 31.

Die beiden Schubglieder 34 werden über einen gemeinsamen Getriebemotor 37 bewegt, weshalb von dem unteren Ende jeder Führungsschiene 16 ein Führungsrohr 38, 39 zu dem Getriebemotor 37 führt. Dieser umfasst ein Getriebegehäuse 41, durch das zwei Bohrungen 42 parallel zueinander hindurch führen. Wegen der aufgebrochenen Darstellung ist lediglich eine der beiden Bohrungen 42 in der Figur erkennbar. Diese Bohrungen 42 laufen tangential an einem Zahnrad 43 vorbei, das drehfest auf einer Getriebeausgangswelle des Getriebemotors 37 sitzt. Das Zahnrad 43 ist mit einer Verzahnung versehen, die zu der Teilung der Wendel 36 auf der Seele 35 passt. Es entsteht eine formschlüssige Verbindung zwischen dem Zahnrad 43 und jedem der beiden Schubglieder 34.

Da die beiden Schubglieder 34 an diametral gegenüberliegenden Seiten mit dem Zahnrad 43 kämmen, werden sie bei der Rotation des Zahnrades 43 jeweils um gleiche Beträge in entgegengesetzter Richtung bewegt.

Der aus der Sicht des betreffenden Führungsrohres 38, 39 über das Zahnrad 43 überstehende Teil des betreffenden Schubgliedes 34 wird in einem nicht weiter gezeigten Speicherrohr aufgenommen.

Die insoweit beschriebene Anordnung arbeitet wie folgt:

Bei vollständig eingefahrenem Rollo 14 liegt das Auszugsprofil 21 auf dem Auszugsschlitz 18 in der Hutablage 17 auf und verdeckt diesen, zumindest über die Länge des Mittelstücks 26. In der eingefahrenen Stellung ist das Auszugsprofil 21 maximal an die Wickelwelle 19 angenähert und befindet sich somit auch in einem Bereich, in dem die beiden Führungsschienen 16 voneinander den maximalen Abstand aufweisen. Da die Länge des Mittelstücks 26 konstant ist, sind zur Kompensation des Abstands der beiden Führungsschienen 16 die Endstücke 28, 29 maximal aus dem Mittelstück 26 herausgezogen. Sie stecken jedoch mit ihren Enden nach wie vor in dem Mittelstück 26 verschiebbar.

Um diese Position zu ermöglichen, sind durch entsprechendendes Ingangsetzen des Getriebemotors 37 die beiden Schubglieder 34 weit genug aus den Führungsschienen 19 zurück gezogen, damit das Auszugsprofil 21 auf der Hutablage 17 aufliegen kann.

Wenn ausgehend von dieser eingefahrenen Stellung die Rollobahn 15 vor dem Heckfenster 4 ausgebreitet werden soll, wird der Getriebemotor 37 in Gang gesetzt. Der Getriebemotor 37 schiebt in entgegengesetzte Richtung, jedoch um gleiche Beträge, die beiden Schubglieder 34 in die Führungsschienen 16 vor. Gegen die Wirkung des Federmotors 22, der ständig bestrebt ist die Rollobahn 15 auf der Wickelwelle 19 aufzuwickeln, wird das Auszugsprofil 21 in Richtung auf die Oberkante des Heckfensters 4 und damit in Richtung auf das obere Ende der beiden Führungsschienen 16 bewegt. Die Kraft, die der Getriebemotor 37 erzeugen kann, ist größer als die Rückzugskraft, die der Federmotor 22 ausübt.

Während der Ausfahrbewegung verkürzt sich der Abstand zwischen den beiden Führungsschienen 16 aus der Sicht des Auszugsprofils 21. Dadurch werden die beiden Endstücke 28 und 29 mit den Führungsstangen 29 zunehmend tiefer in das Mittelstück 26 hineingeschoben. Ihre maximal eingeschobene Stellung nehmen die beiden Endstücke 27 und 28 ein, wenn das Auszugsprofil 21 die obere Endlage vor dem Heckfenster 4 erreicht hat.

Die Rollobahn 15 selbst ist biegeschlaff und damit praktisch nicht in der Lage, andere Kräfte als Zugkräfte, die senkrecht zu der Längserstreckung des Mittelstücks 26 wirken, auf dieses Mittelstück 26 auszuüben. Insbesondere ist die Rollobahn 15 nicht in der Lage, das Mittelstück 26 parallel zu seiner Längserstreckung auf den beiden Endstücke 27, 28 zu verschieben.

Sollte, und was zu erwarten ist, die Reibkraft, die die Führungsstangen 29 der beiden Endstücke 27 und 28 in dem Mittelstück 26 haben, nicht exakt gleich sein, werden die beiden Endstücke 27 und 28 unterschiedlich tief in das Mittelstück 26 eingeschoben sein. Das Mittelstück 26 ist damit nicht mehr in der Solllage gegenüber der Wickelwelle 19, sondern es ist zur rechten oder zur linken Seite, bezogen auf die Darstellung in der Zeichenebene, verschoben. Dieses Verschieben führt zu Schrägspannungen in der Rollobahn 15 und damit zu recht hässlichen Schrägfalten, die als unschön empfunden werden.

Um diesem Verzug entgegen zu wirken, ist das Rollo 14 wie nachstehend beschrieben ausgeführt.

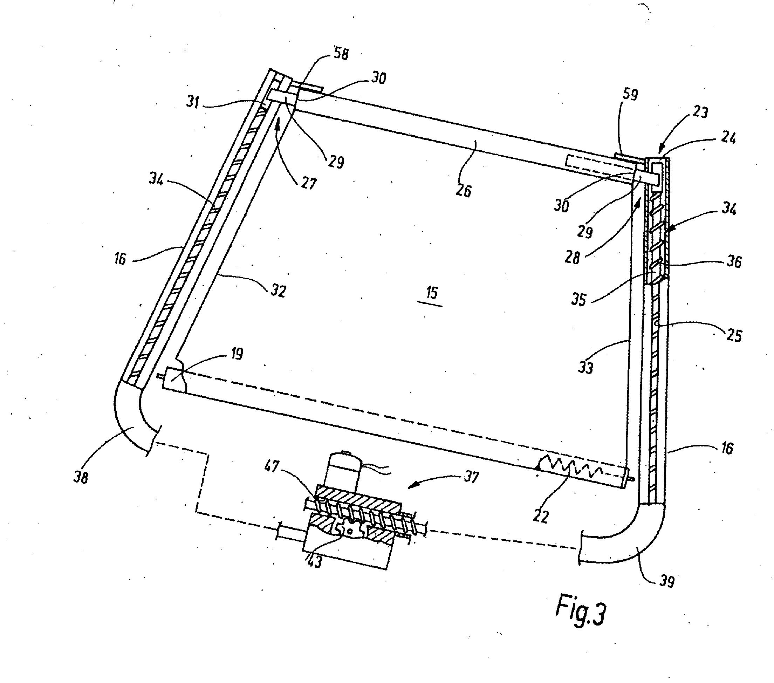

Bei der Ausführungsform nach Fig. 3 sind an dem Mittelstück 26 sind als Zentrierglieder Anschlagglieder 58, 59 vorgesehen, die über die Stirnseiten 30 überstehen und mit den benachbarten Führungsschienen 16 zusammenwirken. In der ausgefahrenen Position stoßen diese Anschlagglieder 58, 59 je nach Lage des Mittelstücks 26 an der betreffenden Führungsschiene 16 an und verschieben das Mittelstück 26, bis die gewünschte zentrierte Lage erreicht ist, in der keine Schrägfalten in der Rollobahn 15 auftreten.

Die beiden Anschlagglieder 58, 59 können wiederum verstellbar an dem Mittelstück 26 angebracht sein um eine nachträgliche Justage zu ermöglichen, die eine Lagetoleranz der Führungsschienen 16 kompensiert.

Bei dieser Art der Zentrierung wird bewusst in Kauf genommen, dass möglicherweise während der Ausfahrbewegung durchaus Schrägfalten in der Rollobahn 15 entstehen können. Am Ende der Ausfahrbewegung sind die Schrägfalten in jedem Falle eliminiert, weil durch die Zentrierung das Mittelstück 26 des Auszugsprofils 21 in die richtige Stellung gezwungen wird.

Die Erfindung ist vorstehend in Verbindung mit einem Heckscheibenrollo im Einzelnen erläutert. Es versteht sich jedoch, dass diese Art der Zentrierung nicht auf Rollos an Heckscheiben beschränkt ist. Vielmehr kann die geoffenbarte Zentrierung des Mittelstücks 26 bei einem längenverstellbaren Auszugsprofil auch bei Dachfensterrollos oder Seitenfesterrollos in Kraftfahrzeugen eingesetzte werden. Da der Grundaufbau bei dieser Art von Rollos der gleiche ist, erübrigen sich entsprechende zeichnerische Darstellungen. Sie würden sich im wesentlichen auf eine Wiederholung der gezeigten konstruktiven Elemente beschränkten.

Ein Kraftfahrzeugfesterrollo weist eine Rollobahn mit etwa trapezförmigem Zuschnitt auf. An der Querkante mit der kürzesten Erstreckung sitzt ein Auszugsprofil, das endseitig in Führungsschienen geführt ist. Die Führungsschienen ändern ihren Abstand voneinander. Um diese Abstandsänderung zu kompensieren gliedert sich das Auszugsprofil in ein Mittelstück, an dem die Rollobahn befestigt ist, und zwei Endstücke, die in den Führungsschienen laufen. Um Schrägfalten in der Rollobahn bei der vollständig ausgefahrenen Position zu vermeiden, sind Zentriereinrichtungen vorgesehen. Diese Zentriereinrichtungen sind lediglich bei voll ausgezogenem Rollo wirksam und wirken auf das Mittelstück ein.

## Patentansprüche

1. Fensterrollo (14) zum Regulieren des Lichteintritts durch ein Fenster (4) in einen Innenraum eines Kraftfahrzeugs,
mit wenigstens einer Wickelwelle (19), die drehbar gelagert ist,
mit wenigstens einer Rollobahn (15), die mit einer Kante an der Wickelwelle (19) befestigt ist,
mit wenigsten einem Paar von Führungsschienen (16), von denen sich jede seitlich neben der aufgespannten Rollobahn (15) erstreckt,
mit einem längenveränderlichen Auszugsprofil (21), das mit einer von der Wickelwelle (19) abliegenden Kante () der Rollobahn (15) verbunden ist und der sich aus einem Mittelstück (26) und zwei Teleskopstücken (27,28) zusammensetzt, die an dem Mittelstück (26) verschieblich gelagert und endseitig in den Führungsschienen (16) geführt sind, **dadurch gekennzeichnet,**
**dass** die wirksame Länge des Mittelstücks (26) durch Glieder (58,59) festgelegt ist, die verstellbar an dem Mittelstück (26) sitzen, derart, dass die wirksame Länge des Mittelstücks (26) dem Abstand der Führungsschienen (16) an jener Stelle entspricht, in die das Mittelstück (26) gelangt, wenn die Rollobahn vollständig ausgefahren ist, wodurch das Mittelstück (26) hinreichend zentriert ist.

## Claims

1. Window roller blind (14) for regulating the entry of light through a window (4) into an interior of a motor vehicle,
with at least one winding shaft (19), which is rotatably disposed,
with at least one blind sheet (15), which is fastened at one edge to the winding shaft (19),
with at least one pair of guide rails (16), each of which extends laterally next to the opened out blind sheet (15),
with a longitudinally displaceable extension profile (21), which is connected to an edge () of the blind sheet (15) remote from the winding shaft (19) and comprises a central piece (26) and two telescopic pieces (27, 28), which are displaceably disposed on the central piece (26) and are guided at the ends in the guide rails (16), **characterised in that** the effective length of the central piece (26) is defined by members (58, 59), which sit adjustably on the central piece (26) in such a manner that the effective length of the central piece (26) corresponds to the spacing of the guide rails (16) at the location, into which the central piece (26) passes when the blind sheet is fully extended, as a result of which the central piece (26) is adequately centred.

## Revendications

1. Store de fenêtre (14) pour réguler l'entrée de lumière à travers une fenêtre (4) dans un espace intérieur d'un véhicule automobile, avec au moins un arbre d'enroulement (19) monté à rotation, avec au moins un rideau de store (15) fixé par un bord à l'arbre d'enroulement (19), avec au moins une paire de rails de guidage (16) s'étendant chacun latéralement à côté du rideau de store déployé (15), avec un profil extensible à longueur variable (21) qui est relié à un bord (), opposé à l'arbre d'enroulement (19), du rideau de store (15) et qui se compose d'une partie centrale (26) et de deux parties télescopiques (27, 28), lesquelles sont montées à coulissement sur la partie centrale (26) et sont guidées à leur extrémité dans les rails de guidage (16), **caractérisé en ce que** la longueur utile de la partie centrale (26) est déterminée par des éléments (58, 59) qui reposent de manière réglable sur la partie centrale (26), de façon que la longueur utile de la partie centrale (26) corresponde à l'écartement des rails de guidage (16) à l'endroit que la partie centrale (26) atteint lorsque le rideau de store est entièrement déployé, de façon que la partie centrale (26) soit suffisamment centrée.
